# EUROPEAN PATENT SPECIFICATION

(11) **EP 0 399 707 B1**
(45) Date of publication and mention of the grant of the patent: **10.07.1996**
(21) Application number: 90305118.3
(22) Date of filing: 11.05.1990
(51) Int. Cl.: B29C 70/08, B32B 27/08, C08J 7/16, B29C 39/10

(54) **Composite sheets**
Verbundfolien
Feuilles composites

(30) Priority: 12.05.1989 IT 2047589
(43) Date of publication of application: 28.11.1990
(73) Proprietor: ELF ATOCHEM ITALIA S.r.l., I-20159 Milano (IT)
(72) Inventor: Colombo, Dario, I-20125 Milan (IT)
(74) Representative: Whalley, Kevin

(56) References cited:
- EP-A- 0 011 436
- EP-A- 0 171 549
- GB-A- 1 220 080
- WORLD PATENTS INDEX LATEST, AN=85-240802 [39], Derwent Publications Ltd, London, GB; & JP-A-60 159 046 (SUMITOMO) 20-08-1985
- WORLD PATENTS INDEX LATEST, AN=80-63169C [36], Derwent Publications Ltd, London, GB; & JP-A-55 097 921 (NANIWA GOBAN) 26-07-1980
- WORLD PATENTS INDEX LATEST, AN=81-64992D [36], Derwent Publications Ltd, London, GB; & JP-A-56 089 552 (DAICEL) 20-07-1981

## Description

The present invention relates to composite sheets.

More particularly the present invention relates to composite sheets and to their use as means of covering suitably to be applied to the inner or outer surfaces in the field of building/furnishings.

The present invention may be used in the production of shaped bodies having a composite inner and/or outer surface such as pipes, structural shapes and the like.

It is known to use melaminic laminates for the covering of furniture and of outer surfaces of buildings. These materials, although they present satisfactory aesthetic properties, are subject to deterioration from atmospheric agents or from wear and tear with time.

In fact, these materials under the action of the sun irradiation tend to yellow and in the presence of moisture they are subject to discolouration, delaminization and dimensional instability.

The present invention provides a composite sheet comprising at least one layer of a thermoplastic polymer containing in its repeating units one or more polar groups and selected from polyvinylchloride, impact resistant polyvinylchloride, styrene-acrylonitrile copolymers and acrylonitrile- butadiene-styrene copolymers, and at least one layer of resin consisting of polymethylmethacrylate reinforced with one or more inert fillers, said resin being polymerized directly on said thermoplastic layer by starting from a polymerizable suspension of methylmethacrylate or a methylmethacrylate and polymethyl methacrylate syrup containing ineart fillers characterized in that the suspension or the syrup contains a silanizing agent for the filler and a catalyst of the silane hydrolysis selected from ammonium salts or organic acids.

The present invention further provides the use of a composite sheet according to the invention in the field of building as a covering for outer surfaces of buildings or in place of concrete-and-glass or fiber-cement panels, in the field of inner or outer furnishings as coverings for surfaces which must not be scratched or must remain unaltered, for furniture and floors, in the field of chemical plants as abrasion-resistant sheets or as heat, or chemical corrosion resistant sheets.

The present invention may be used in the production of shaped bodies having a composite inner and/or outer surface.

According to preferred embodiments of the composite sheets of the present invention, the layer of thermoplastic polymer can be single or multiple, optionally with one or more components, of the alveolate, compact, expanded, or semi-expanded type and can be obtained by any known technique, for instance by extrusion, coextrusion, rolling, calendering, thermopressing and the like and can consist of polymers which can be processed by these technologies.

Blends or mixtures of thermoplastic polymers as described hereinbefore can be used as well.

Preferred polymers are, however, polyvinylchloride and shockproof (impact resistant) polyvinylchloride, because they are economical and can be manufactured easily.

The thermoplastic polymer layer can be also obtained by using techniques which differ from the above mentioned ones, for instance by using the casting technique of liquid monomers capable of being hardened such as methylmethacrylate. This processing technique is well known in the art and is described in British patent Nos. GB-A-588,658, GB-A-641,284 and JP-A-60 159 046.

The above mentioned polymers can be used as such or in mixture with additives such as mineral or organic fillers, antistatic agents, dyes, nucleants, plasticizers, pigments, stabilizers, shockproofing agents, flame retarding agents and the like, which are added in order to improve the physical-chemical properties of the finished product.

The thickness of the thermoplastic polymer layer depends on the final use of the composite sheet of the present invention; however, thicknesses ranging from 1 to 10 mm are generally used.

The reinforced polymethylmethacrylate resin layer with inert filler may be obtained by polymerizing, on the thermoplastic layer, a suspension of methyl methacrylate or a methylmethacrylate and polymethylmethacrylate syrup and a finely ground mineral filler, such as silica, alumina or mica.

Suspensions or syrups which may be used in the invention are described in Italian patent application 23,050 A/87, and in GB-A-2213824 and EP-A-0321193, according to which fluid suspensions are described which are stable and capable of being hardened and which are obtained by adding to a polymerizable liquid such as methylmethacrylate or to a syrup containing methylmethacrylate and polymethyl- methacrylate, a finely ground mineral filler, for instance cristobalite having a surface area ranging from 0.5 to 10 m²/g, in the presence of an agent capable of silanizing the filler, such as gamma-methacryloxypropyltrimethoxysilane, and of a catalyst for the silane hydrolysis which is an ammonium salt of an organic acid, such as isopropylammonium methacrylate.

The mineral filler is used in amounts ranging from 30 to 80% by weight on the basis of the whole, whereas silane and catalyst are used in amounts ranging from 0.01 to 2% by weight, with respect to the filler, and from 0.01 to 0.5% by weight, with respect to the whole of the composition. The suspension can be used as such or additioned with pigments and/or crosslinking agents.

The thickness of the layer of reinforced polymethyl methacrylate resin also depends on the final use of the composite sheet: however, thicknesses ranging from 0.2 to 5 mm or from 1 to 3 mm are generally used.

Different techniques can be used for the preparation of the composite sheets of the present invention. For instance a polymerizable suspension, after having been additioned with a polymerization catalyst, is poured into the space obtained between a thermoplastic polymer sheet and a metal or glass sheet spaced from each other by a gasket of an elastomeric or plasto-elastomeric material. The polymerization of the suspension can be carried out at low or high temperatures, according to the kind of catalyst which is used.

Alternatively the composite sheet of the present invention can be obtained by continuous systems according to which a sheet or a continuous strip of thermoplastic polymer is fed to a distribution section, where the suspension, as such or already partly pre-polymerized, is applied to the support (sheet or continuous strip) by spraying, casting, or spreading by means of rollers or brushes.

At the end of the polymerization the sheet or the continuous strip is cut according to the desired shape and size.

Before distributing the suspension onto the thermoplastic sheet or strip, or before the surface treatment for making the thermoplastic sheet or strip compatible, it is preferred to clean or to degrease the surface of the sheet or strip, in order to make the adhesion of the reinforced resin easier.

The composite sheets of the present invention, as compared with similar polymer sheets as such, present a higher resistance to external atmospheric agents, heat, moisture and, in particular, to stratching or abrasion; they can be used in the field of building as covering of outer surfaces of buildings or in place of concrete-and-glass or fiber-cement panels, owing to their higher resistance to atmospheric agents. Moreover they can be used in the field of inner or outer furnishing as coverings of surfaces, which must not be scratched or must remain unaltered, for furniture or for superelevated floors; they can be used also in the field of chemical plants as abrasion-resistant sheets or as heat, or chemical corrosion, resistant sheets.

The invention will be further described with reference to the following illustrative Examples.

### EXAMPLE 1

A rigid PVC sheet, having an area of 1 m² and being 6 mm thick, was degreased with an aqueous solution containing 10% by weight of acetic acid; afterwards it was connected with a sheet of stainless steel, between which a peripheral gasket of ethylene-propylene-diene rubber, being 3 mm thick, was interposed.

A suspension, obtained according to example 3 of Italian patent application 23,050 A/87 (EP-A-0321193), was poured into the hollow space. After polymerization of the suspension (according to the technique of Example 1 of the above mentioned patent application) there was obtained a composite sheet, reproducing the surface of the stainless steel sheet.

The thus obtained sheet was applied on the wall of a building looking south and was kept in this position over 12 months. After this period of time the sheet proved to be unaltered both from the point of view of colour and from the point of view of dimensional stability.

### EXAMPLE 2

Example 1 was repeated, while replacing the PVC sheet with an impact resistant PMMA sheet which was connected with a tempered crystal plate; a gasket, being 3 mm thick, was interposed between sheet and plate.

After polymerization there was obtained a sheet with a glossy shiny surface, suitable to be used as shelves or tables.

### EXAMPLE 3

A suspension as used in Example 1, was introduced into a hollow space obtained between an outer steel pipe and a plasticized PVC pipe, which was inner and co-axial with the first pipe. The suspension was polymerized by keeping the inner pipe under isostatic pressure (0.3 MPA) by means of water at 70°C. A stiff pipe was obtained having an inner surface suitable for conveying abrasive material.

### EXAMPLE 4

A suspension, as used in Example 1, was introduced into a hollow space obtained between an outer plasticized PVC pipe and a steel pipe, which was inner and co-axial with the first pipe. The suspension was polymerized by keeping the inner pipe at high temperature by means of water at 70°C. A stiff pipe was obtained having an inner surface suitable for conveying abrasive material.

## Claims

1. A composite sheet comprising at least one layer of a thermoplastic polymer containing in its repeating units one or more polar groups and selected from polyvinylchloride, impact resistant polyvinylchloride, styrene-acrylonitrile copolymers and acrylonitrile-butadiene-styrene copolymers, and at least one layer of a resin consisting of polymethylmethacrylate reinforced with one or more inert fillers, said resin being polymerized directly on said thermoplastic layer by starting from a polymerizable suspension of methylmethacrylate or a methylmethacrylate and polymethylmethacrylate syrup containing inert fillers characterized in chat the suspension or the syrup contains a silanizing agent for the filler and a catalyst for silane hydrolysis selected from the ammonium salts of organic acids.

2. A sheet as claimed in claim 1, wherein the inert filler is a mineral filler.

3. A composite sheet according to claims 1 or 2, wherein the polymerizable suspension or syrup is pre-additioned with a polymerization catalyst.

4. Use of a composite sheet according to any of the preceding claims, in the field of building as a covering for outer surfaces of buildings or in place of concrete-and-glass or fiber-cement panels, in the field of inner or outer furnishings as coverings for surfaces which must not be scratched or must remain unaltered, for furniture and floors, in the field of chemical plants as abrasion-resistant sheets or as heat, or chemical corrosion resistant sheets.

## Patentansprüche

1. Verbundfolie, umfassend zumindest eine Schicht eines thermoplastischen Polymeren, das in seinen Grundeinheiten eine oder mehrere polare Gruppen enthält und ausgewählt wird aus Polyvinylchlorid, stoßfestem Polyvinylchlorid, Styrol-Acrylnitril-Copolymeren und Acrylnitril-Butadien-Styrol-Copolymeren, und zumindest eine Schicht eines Harzes, bestehend aus Polymethylmethacrylat, verstärkt mit einem oder mehreren inerten Füllstoffen, wobei das Harz direkt auf der thermoplastischen Schicht polymerisiert wird, indem von einer polymerisierbaren Suspension von Methylmethacrylat oder von einem Methylmethacrylat und Polymethylmethacrylatsirup, der inerte Füllstoffe enthält, ausgegangen wird, dadurch gekennzeichnet, daß die Suspension oder der Sirup ein Silanisierungsmittel für den Füllstoff und einen Katalysator für Silanhydrolyse enthält, der aus den Ammoniumsalzen organischer Säuren ausgewählt wird.

2. Folie nach Anspruch 1, wobei der inerte Füllstoff ein mineralischer Füllstoff ist.

3. Verbundfolie nach Anspruch 1 oder 2, wobei der polymerisierbaren Suspension oder dem Sirup vorher ein Polymerisationskatalysator zugegeben wird.

4. Verwendung einer Verbundfolie nach einem der vorhergehenden Ansprüche auf dem Gebiet des Bauwesens als ein Belag für die äußeren Oberflächen von Gebäuden oder anstelle von Beton-und-Glas oder Faserzementplatten, auf dem Gebiet der Innen und Außenausstattungen als Beläge für Oberflächen, die nicht zerkratzt werden dürfen oder unverändert bleiben müssen, für Möbel und Fußböden, auf dem Gebiet chemischer Anlagen als abriebfeste Folien oder als Folien, die gegen Hitze oder chemische Korrosion widerstandsfähig sind.

## Revendications

1. Feuille composite comprenant au moins une couche d'un polymère thermoplastique contenant dans ses unités récurrentes, un ou plusieurs radicaux polaires et choisi parmi le poly(chlorure de vinyle), le poly(chlorure de vinyle) résistant aux chocs, les copolymères styrène-acrylonitrile et les copolymères acrylonitrile-butadiène-styrène, et au moins une couche d'une résine consistant en du poly(méthacrylate de méthyle) renforcée par une ou plusieurs charges inertes, la résine étant polymérisée directement sur la couche thermoplastique en partant d'une suspension polymérisable du méthacrylate de méthyle ou d'un sirop polymérisable de méthacrylate de méthyle et de poly(méthacrylate de méthyle) contenant les charges inertes, caractérisée en ce que la suspension ou le sirop contient un agent de silanisation pour la charge et un catalyseur pour l'hydrolyse du silane, choisi parmi les sels d'ammonium d'acides organiques.

2. Feuille suivant la revendication 1, dans laquelle la charge inerte est une charge minérale.

3. Feuille composite suivant la revendication 1 ou 2, dans laquelle on ajoute préalablement à la suspension ou au sirop polymérisable, un catalyseur de polymérisation.

4. Utilisation d'une feuille composite suivant l'une quelconque des revendications précédentes, dans le domaine de la construction, en tant que couverture des surfaces extérieures de constructions ou à la place des panneaux de béton-et-verre ou de fibres-ciment, dans le domaine des garnitures intérieures et extérieures comme couvertures de surfaces qui ne peuvent être rayées ou qui doivent rester inaltérées, pour les meubles et sols, dans le domaine des installations chimiques comme feuilles résistant à l'abrasion ou comme feuilles résistant à la chaleur ou à la corrosion chimique.
